# EUROPÄISCHE PATENTANMELDUNG

(11) **EP 1 447 303 A2**
(43) Veröffentlichungstag der Anmeldung: **18.08.2004**
(21) Anmeldenummer: 04003363.1
(22) Anmeldetag: 16.02.2004
(51) Int. Cl.: B62B 13/14

(54) **Lenk- und Bremsvorrichtung für einen Rodelschlitten sowie Rodelschlitten mit solcher Lenk- und Bremsvorrichtung**

(30) Priorität: 17.02.2003 DE 10306739
(71) Anmelder: Gramse, Siegfried, 38228 Salzgitter (DE)
(72) Erfinder: Gramse, Siegfried, Ing., 38228 Salzgitter-Lichtenberg (DE); Gramse, Stefan, 38228 Salzgitter-Lichtenberg (DE)

(57) **Zusammenfassung**

Die Erfindung betrifft eine Lenk- und Bremsvorrichtung (2) an und/oder für einen Rodelschlitten (1), der mit zwei unlenkbaren Schlittenkufen (3, 4) versehen ist. Diese Vorrichtung weist zwei voneinander unabhängig und anschlagbegrenzt höhenverschwenkbar an den Schlittenkufen befestigte bzw. befestigbare sowie mittels Federkraft (17, 18) um ihre am vorderen Ende vorgesehene Lagerachse (15, 16) in Außerfunktionsstellung hochschwenkbare, spiegelbildliche Schwingen (11, 12/12') auf, welche jeweils das eigentliche Lenk- und Bremsorgan (13, 14/14') tragen. Das Erfindungswesentliche besteht darin, daß die beiden Schwingen (11, 12/12') die Schlittenkufen (3,4) in der vorderen Rodelschlitten-Hälfte, insbesondere etwa im Bereich der Kufenbögen, überlappend und/oder übergreifend ausgebildet sind und jeweils ein in der Draufsicht des Rodelschlittens (1) bzw. der montierten Lenk- und Bremsvorrichtung (2) in Gebrauchsstellung an der Kufeninnenseite vorspringendes, zumindest mit seinem rückwärtigen Ende in Richtung Rodelschlitten-Symmetrieebene (S) schräggestelltes Lenkund Bremsorgan (13, 14/14') mit hochkantigem, seitliche Widerstandsflächen bildenden Querschnitt tragen.

## Beschreibung

Die Erfindung betrifft eine Lenk- und Bremsvorrichtung an einem bzw. für einen Rodelschlitten mit zwei unlenkbaren Schlittenkufen, wobei diese Vorrichtung zwei voneinander unabhängig und anschlagbegrenzt höhenverschwenkbar an den Schlittenkufen befestigte bzw. befestigbare sowie mittels Federkraft um ihre am vorderen Ende vorgesehene Lagerachse in Außerfunktionsstellung hochschwenkbare, spiegelbildliche Schwingen aufweist, welche jeweils das eigentliche Lenk- und Bremsorgan tragen.

Ein derartiger Stand der Technik ist durch die CH-PS 48 909 bekannt. Dabei sind an einem Kufenschlitten unterhalb der Sitzbank an beiden unlenkbaren Schlittenkufen außenseitig lange Schwingen angebracht, die als Winkelhebel gestaltet sind und deren freie Enden hakenbildend abgebogen sind und bodenseitig gezackte "Bremsschuhe" bilden. Die scharfkantigen Reißzinken können bei geringer Schneehöhe in den Boden eindringen und die Bodenfläche und/oder Grasnarbe der Rodelfläche stark beschädigen, wodurch Erosion und Abschlämmung gefördert wird. Außerdem stellen die außenliegenden Schwingen und deren Reißzinken bei in der Praxis nicht verhinderbaren Kollisionen und Stürzen von Rodelschlitten eine beträchtliche Unfallgefahr dar - der volkswirtschaftliche Schaden ist somit sehr groß.

Der Erfindung liegt die Aufgabe zugrunde, eine verbesserte Lenk- und Bremsvorrichtung an einem bzw. für einen Rodelschlitten zu schaffen, die einerseits die Verletzungsgefahr für den/die Benutzer/Benutzerin sowie die Rodelfläche erheblich reduziert und somit den sonst oftmals unvermeidlichen Schaden minimiert.

Erfindungsgemäß wird eine Lenk- und Bremsvorrichtung für einen Rodelschlitten sowie ein solcher Rodelschlitten mit zwei unlenkbaren Schlittenkufen durch die kennzeichnenden Merkmale gemäß Anspruch 1 bzw. 15 verbessert. Vorteilhafte Weiterbildungen ergeben sich aus den Ansprüchen 2 bis 14.

Das Auszeichnende der erfindungsgemäßen Maßnahmen liegt in der Anordnung von zwei V-förmig angestellten, insbesondere flügelbildenden Lenk- und Bremsorganen innerhalb des durch die Schlittenkufen begrenzten und letztlich auch geschützten Raumes. Mit solchen V-förmig angestellten, gleitenden "Lenkflügeln" wird bereits bei leichtem Widerstand durch den Schnee eine gute Lenkfähigkeit erreicht. Selbst wenn die flügelbildenden Lenk- und Bremsorgane tiefer in die Rodelbahn eingreifen, d.h. mit der Boden(ober)fläche in Berührung kommen, wird der Untergrund der Rodelbahn nicht aufgerissen - wie dies beim Vorbekannten gemäß CH-PS 48 909 der Fall ist - und ist somit äußerst umweltschonend. Die innenliegende Lenkflügel-Unterbringung vermindert erheblich die Körper-Verletzungsgefahr für den/die Rodler/Rodlerin. Insgesamt ergibt sich eine volkswirtschaftlich vorteilhafte Rodelschlitten-Lenkung. Zum gewünschten Lenken wird das rechte oder linke Lenk- und Bremsorgan niedergedrückt und zum Bremsen bedient man beide zugleich (gleichzeitig). Die paddelartig wirkenden, in bezug auf die Geradeausfahrt-Richtung (Rodelschlitten-Längsrichtung) schrägstehenden Lenk- und Bremsorgane führen durch den Seitendruck, welcher vom Widerstandsmedium (Schnee und/oder Eis) zwischen den beiden Schlittenkufen (Gleitkufen) in niedergedrückter Arbeitsposition aufgebaut wird (d.h. einwirkt), zur "Lenkung" oder zum "Bremsen". Beides ist dosiert durchführbar - eine geringe höhenmäßige Eindringtiefe ergibt einen kleinen Lenkausschlag bzw. eine schwache Abbremsung und eine große Eindringtiefe bewirkt einen großen Lenkausschlag bzw. eine starke Abbremsung.

Dies Patent schützt sowohl den Bausatz für eine neue Lenk- und Bremsvorrichtung für Rodelschlitten vom Typ Kufenschlitten, insbesondere Davos-Rodelschlitten, als auch einen solchen Kufenschlitten mit erfindungsgemäßer Lenk- und Bremsvorrichtung.

Aus dem DE-Gebrauchsmuster DE 87 14 873 U1 ist ein gattungsfremder Rodelschlitten mit einer Lenk- und Bremseinrichtung bekannt, bei dem auf zwei Kufen 1 ein rahmenartiger Aufbau lagert, auf dem die Sitzfläche 3 angeordnet ist, und der vordere, hochgezogene Bereich der Kufen 1 durch eine Querstrebe 4 verbunden ist. In einer fest an der Querstrebe 4 angeordneten, auf der Schlittensymmetrieachse liegenden Führung ist eine einzige, breite Lenkkufe 6, mit daran höhenverschwenkbar angelekter Bremskralle 7, vertikal führbar und drehbar gelagert. Die Führung 5 und die Lenkkufe 6 sind an einem bis über die Sitzfläche 3 reichenden Lenkhebel 10, der zwei querverlaufende Handgriffe 18 aufweist, mittels Hebelgestänge gelenkig verbunden. Gemäß Seite 7, Absatz 2 der DE 87 14 873 U1 ergibt sich folgende Funktion :
Durch Ankippen des Lenkhebels 10 wird die Lenkkufe 6 nach unten auf den Schnee gedrückt und durch seitliches Verdrehen des Lenkhebels 10 ein Verdrehen der Lenkkufe 6 und damit bei in Fahrt befindlichen Rodelschlitten eine Richtungsänderung bewirkt. Wird der Lenkhebel 10 noch stärker angekippt, erfolgt über das Hebelgestänge ein Ausschwenken der Bremskralle 7 in Funktionsstellung. Die Intensität des Abbremsens durch die Bremskralle 7 ist über die Kippstellung des Lenkhebels 10 beeinflußbar.

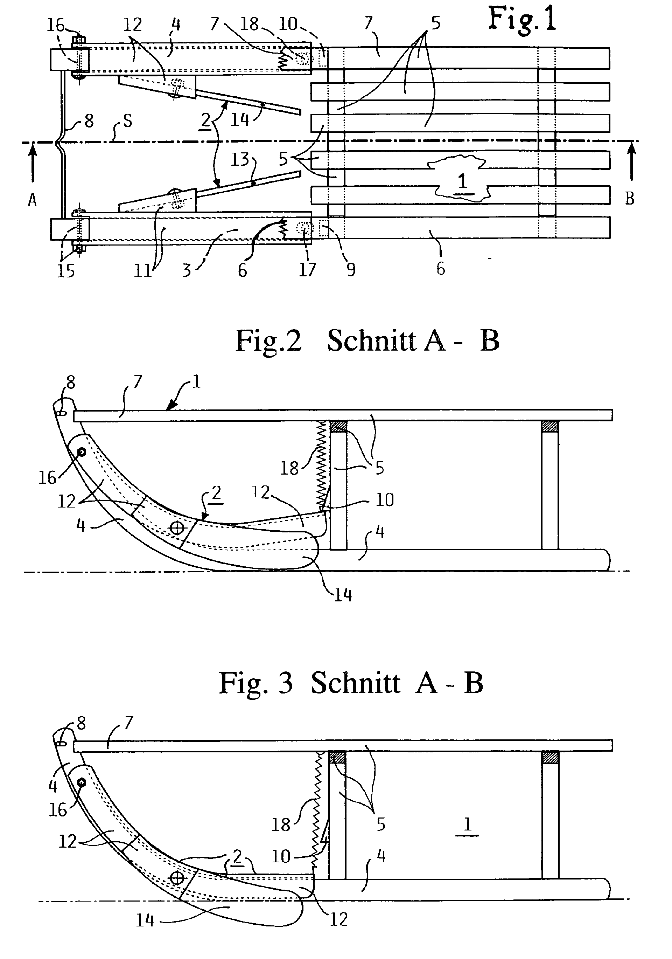

Der Stand der Technik gemäß DE 87 14 873 U1 basiert auf einer unabhängig vom eigentlichen Schlittengestell beweglichen Lenk- und Bremseinheit, die einen sehr hohen technischen Aufwand durch viele Gelenke, Drehwinkel und aufwendige Hebeleinrichtung verursacht sowie gewichtsmäßig schwer und in der Herstellung teuer ist. Besonders nachteilig ist, daß durch die über das Schlittengestell weit herausragenden Teile, insbesondere Lenk(stock)hebel vor dem Körper des Rodlers bzw. der Rodlerin, eine erhöhte Unfallgefahr besteht. Die voluminöse und schwere Konstruktion der Lenk- und Bremseinrichtung führt zur Kopflastigkeit des Rodelschlittens. Die Körperbalancierung wird in hohem Maße nachteilig beeinflußt. Die sehr breite, skiartige Auflagefläche der Lenkkufe (siehe Fig.2) reagiert unabhängig von den Schlittenkufen-Auflageflächen und somit im Schnee auf alle Höhen und Tiefen zwischen den Schlittenkufen - die Folge beim Rodeln auf stark unebener Rodelfläche ist ein "Schlagen der Lenkung" nach oben und unten sowie (sofern der Lenkhebel nicht ständig festgehalten wird) auch zu den Seiten. Komfortables und sicheres Rodeln erfordert vielfach jedoch ein Festhalten an der Sitzbank, was auch eine gute Balancierung per Körpergewicht-Verlagerung begünstigt - und hier kaum möglich sein dürfte. Die Anordnung der Lenk- und Bremseinrichtung zwischen den beiden Kufenbögen kann auch die Fußabtützung beeinträchtigen. Nachteilig ist auch die "Verzahnung 17" der Bremskralle 7, da sie die Rodelbahn, insbesondere Höcker in derselben, aufreißen kann.

Die erfindungsgemäße Lösung behebt viele Mängel der DE 87 14 873 U1 auf einfache Weise. Die Erfindung ist kleinvolumig ausführbar, dabei platz- und kostensparend aufgebaut, und erfüllt auch die Grundvoraussetzungen zur unabhängigen Balancierung während der Schlittenfahrt - dies bei normaler, d.h. bei gewohnter und vorteilhafter Fußabstützung im Kufenbogen und evtl. Festhalten an der Sitzbank. Neben der einfachen und leicht durchführbaren Fußbetätigung zum Lenken und/oder Abbremsen ist es auch von großem Vorteil, daß keinerlei nachteilige Seiten- und Höhenkräfte auf den Rodelschlitten und/oder dessen Benutzer(in) einwirken. Die Rodelbahn wird relativ gut behandelt und weitgehend geschont. Das Rodeln wird vereinfacht und ist aufgrund verminderter Unfallgefahrenquellen trotz vorhandener Lenk- und Bremseinheit nicht gefährlicher als bei Rodelschlitten ohne komforsteigender Lenk- und Bremseinheit.

Auf den Zeichnungen sind Ausführungsbeispiele der Erfindung schematisch dargestellt und werden nachfolgend näher erläutert. Es zeigen :
- Fig. 1: eine Draufsicht auf einen erfindungsgemäß ausgebildeten Rodelschlitten "Davoser" Bauart, welcher spiegelbildliche Hälften, zwei Schlittenkufen (Gleitkufen) und eine mit Abstand zum vorderen Schlittenende angeordnete Sitzbank aufweist sowie in dem der Sitzbank vorgelagerten Bereich mit einer erfindungsgemäßen Lenk- und Bremsvorrichtung versehen ist - wobei die jeweils zum vorderen Kufenende verlaufenden seitlichen Gestell-Längsholme der besseren Sicht (auf die Lenk- und Bremsvorrichtung) wegen vor der Sitzbank abgebrochen dargestellt sind,
- Fig. 2: einen mittleren Längsschnitt desselben Rodelschlittens entlang der Schnittlinie A-B (gleich Symmetrieebene S) in Fig. 1, bei in "Außerfunktionsstellung" gehaltener, d.h. angehobener Lenk- und Bremsvorrichtung,
- Fig. 3: einen mittleren Längsschnitt desselben Rodelschlittens mit in "Funktionsstellung", d.h. in Lenk- oder Bremsposition, niedergedrückter Lenk- und Bremsvorrichtung,
- Fig. 4: eine Draufsicht auf die linke Hälfte einer spiegelsymmetrisch aufgebauten erfindungsgemäßen Lenk- und Bremsvorrichtung (ohne Rodelschlitten-Abbildung), mit an einer Schwinge lösbar angebrachtem flügelartigen Lenk- und Bremsorgan,
- Fig. 5: eine von der Rodelschlitten-Symmetrieebene (Mitte) aus vorgenommene Seitenansicht der selben linken Vorrichtungshälfte gemäß Fig. 4,
- Fig. 6: eine vom vorderen Vorrichtungsende aus gesehene Front- oder Vorderansicht der selben linken Vorrichtungshäfte und
- Fig. 7: eine Draufsicht auf eine gegenüber Fig. 4 abgeänderte , einstückige linke Hälfte einer erfindungsgemäßen Lenk- und Bremsvorrichtung für Rodelschlitten mit seitlichen Schlittenkufen.

Eine erfindungsgemäße Lenk- und Bremsvorrichtung für einen Rodelschlitten 1 ist insgesamt mit 2 beziffert. Sie (Pos. 2) kann sowohl als Bausatz für einen Kufenschlitten, insbesondere eines solchen Davoser Bauart, als auch als Bestandteil eines erfindungsgemäßen Rodelschlittens 1 ausgebildet sein und/oder vertrieben werden.

Der Rodelschlitten 1 ist vorzugsweise in an sich bekannter Weise als Kufenschlitten mit
a) zwei seitlichen, vorderendig nach oben hochgebogenen Schlittenkufen (Gleitkufen) 3, 4,
b) einer Sitzbank 5 - die zwei bis zu den vorderen Kufenenenden reichende seitliche Längsholme 6, 7 aufweisen kann - sowie
c) in bevorzugter und vorteilhafter Weise (d.h. gegebebenfalls) mit einer im vorderendigen Schlittenbereich vorgesehenen und der Befestigung eines Seiles, einer Kette od.dgl. (nicht dargestellt) dienenden Querstrebe 8
ausgeführt. Zusätzlich ist an der Sitzbank 5 in jedem Seitenbereich ein Anschlag 9, 10 für die Höhenbegrenzung der erfindungsgemäßen Lenk- und Bremsvorrichtung 2 in ihrer "Außerfunktionsstellung" anzubringen oder angebracht - Fig. 1-3 zeigen dies prinzipmäßig, d.h. ohne Beschränkung auf die dargestellte Ausführungsform.

Die erfindungsgemäße Lenk- und Bremsvorrichtung 2 ist ebenfalls spiegelbildlich aufgebaut. Sie (Pos. 2) besteht auf jeder Seite im wesentlichen aus drei Funktionsteilen, nämlich
a) einer um eine vordere Schwenkachse höhenverschwenkbaren Schwinge 11, 12 mit zugeordnetem flügelartigen Lenk- und Bremsorgan 13, 14 (gemäß Fig. 1-6) oder 13', 14',
b) einem am vorderen (oberen) Schwingenende vorgesehenen Lager- und/oder Schwenkorgan 15, 16, wie Bolzen, Bolzen plus Mutter, Bolzen plus Absteckelement (Splint, Sicherungsring), Lagerbohrung (wozu an der Schlittenkufe 3, 4 ein bolzen- oder dornartiges Lagerelement vorzusehen/vorgesehen ist), und
c) einem das Schwingen-Hochhalten in/zur "Außerfunktionsstellung" bewirkenden Federelement 17, 18.

Wie aus der Zeichnung prinzipmäßig zu erkennen ist, überlappen und/oder übergreifen die beiden Schwingen 11, 12 die jeweilige Schlittenkufe 3 oder 4 in der vorderen Rodelschlitten-Hälfte, insbesondere etwa im Bereich der Kufenbögen (siehe Fig. 1-3). Sie (Pos. 11, 12) tragen jeweils ein in der Draufsicht des Rodelschlittens 1, d.h. der montierten Lenk- und Bremsvorrichtung 2 in der "Gebrauchsstellung oder Arbeitsposition" an der Schlittenkufen-Innenseite vorspringendess, mit seinem rückwärtigen Ende in Richtung Rodelschlitten-Symmetrieebene S schräggestelltes flügelartiges Lenk- und Bremsorgan 13, 14 oder 13', 14'. Dieses (Pos. 13, 14 oder 13', 14') ist als ein hochkantiges, mit der Querschnitts-Längsachse zumindest annähernd vertikal stehendes dünnes Bauteil ausgeführt und bildet seitliche "Widerstandsflächen" für den Schnee und/oder das Eis, welches auf der Rodelbahn zwischen den beiden Vorrichungshälften vorhanden ist. Die beiden Schwingen 11, 12 sowie die beiden "Flügel", nämlich die als Lenk- und Bremsorgan titulierten Elemente mit den Ziffern 13, 14 oder 13', 14', sind nach hinten (d.h. in Richtung Sitzbank 5 oder Rodler) auf einem Bogen (vgl. Zeichnung) oder auf einer Schrägen abfallend (nicht dargestellt) ausgbildet und vorzugsweise sowohl im Querschnitt, als auch zumindest am rodlerseitigen (d.h. sitzbankseitigen) Ende abgerundet - wodurch eine Verletzungsgefahr für den/die Rodler/Rodlerin und auch die Boden-Oberfläche (Krume der Rodelbahn) weitgehendst ausgeschlossen ist.

Bei der Ausführung gemäß Fig. 1-6 ist jedes flügelartige - in der Funktion umgekehrt wie ein Paddel eines Paddelbootes (wo ja das Paddel bewegt und der Bootskörper selbst ungesteuert ist) wirkende - Lenk- und Bremsorgan (in der Praxis auch nur als "Flügel" benennbare Element) 13, 14 in Steck- und/oder Schraubverbindung, somit austauschbar, an der Schwinge 11, 12 befestigt. Dabei können die beiden Teile aus Metall, vorzugsweise Leichtmetall, oder die Schwingen 11, 12 aus Metall und die das Lenken oder die Abbremsung vornehmenden Lenk- und Bremsorgane ("Flügel") 13, 14 aus bruchsicherem Kunststoff (z.B. aus sogen. "Vulkulan") gefertigt sein.

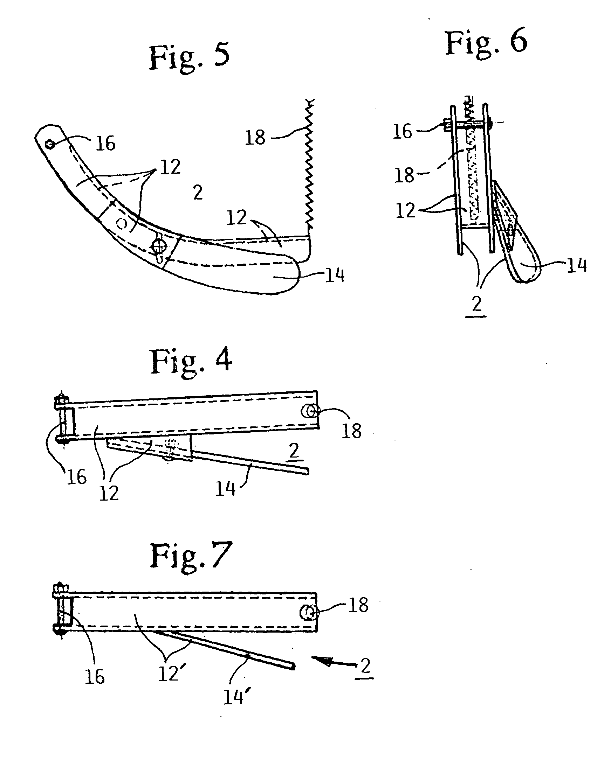

Bei einer abgeänderten Ausführungsform gemäß Fig. 7 sind jede "Schwinge" 11', 12' und der von ihr getragene "Flügel" (als "Lenk- und Bremsorgan" bezeichnet) 13', 14' einstückig, z.B. Guß- oder Spritzguß-Teil, hergestellt.

Um die Bruchgefahr und/oder Verletzungsgefahr beim Überfahren eines besonders harten Widerstands, z.B. eines Steines, auf ein Minimum zu reduzieren, kann es vorteilhaft sein - und dies ist in der Praxis auch bevorzugt - die flügelbildenden Lenk- und Bremsorgane 13, 14 oder 13', 14' nachgiebig , insbesondere elastisch anzuordnen und/oder auszubilden.

Gemäß einer weiteren, nicht dargestellten Ausführungsform bestehen die beiden flügelartigen Lenk- und Bremsorgane jeweils aus einem Gummiteil, der an einer Schwinge 11, 12 vorzugsweise austauschbar befestigt ist.

Die seitlichen, der Rodelschlitten-Symmetrieebene S zugewandten und in bezug auf dieselbe sowie auf die Fahrtrichtung schräggestellten Funktionsflächen der beiden Lenk- und Bremsorgane 13, 14 oder 13', 14' schließen jeweils mit der benachbarten Schlittenkufe 3, 4 einen Winkel von etwa 10° bis 30° ein. In der Praxis (ohne Öffentlickeit erprobt) hat sich ein Schrägstellungswinkel von annähernd 20°-25° bewährt.

Wie auch aus den Fig. 2-3 und 5 zu erkennen, ist es bevorzugt - und in der Praxis auch vorteilhaft - die bodenseitige Peripherie der beiden flügelartigen Lenk- und Bremsorgane 13, 14 der erfindungsgemäßen Lenk- und Bremsvorrichtung 2 bogenförmig zu gestalten (gleiches gilt für die Ausführungsart gemäß Fig. 7).

Besonders vorteilhaft und bevorzugt ist eine Bogenform, die beim Aufsetzen des jeweiligen Lenk- und Bremsorgans 13/13' oder 14/14' (beim Lenkvorgang) bzw. 13/13' plus 14/14' (beim Bremsvorgang) auf die Rodelbahn stets einen Bodenkontakt der Flügel-Mitte (d.h. des Mittenbereichs des Bogens oder der Ballenform) ermöglicht.

Eine Eindringtiefe der Lenk- und Bremsorgane in die Schnee- und/oder Eisdecke einer Rodelbahn ist besonders bevorzugt und vorteilhaft, weil bereits mit geringfügigem Niederdrücken der Schwinge 11 oder 12 gelenkt bzw. beider Schwingen 11 plus 12 abgebremst wird.

Der Querschnitt beider spiegelbildlichen Schwingen 11, 12 ist als kopfstehendes "U" (siehe Zeichnung) oder "L" (nicht dargestellt) ausgebildet. In jedem Fall bildet der obenliegende Querschnittsabschnitt die Auftrittsfläche für den/die Rodler/Rodlerin.

Bei einer nicht dargestellten Ausführung sind die Schwingen 11, 12 "fernbedienbar", vorzugsweise mit einem Seilzug, ggf. auch mit einem Betätigungsgestänge, verbunden.

Die Federbelastung der Schwingen 11, 12 zwecks Anhebens derselben in die "Außerfunktionsstellung" erfolgt gemäß Zeichnung mittels Zugfedern. Es können jedoch auch Druckfedern oder Torsionsfedern oder Gummielemente zum Einsatz gelangen.

Des weitern kann es vorteilhaft sein, Federelemente mit einstellbarer Federkraft zu verwenden.

In der Praxis (ohne Öffentlichkeit) hat es sich bei langer Rodelzeit auch als vorteilhaft erwiesen, die Schwingen 11, 12 mit solch großer Kraft hochzuhalten, daß der Fuß des/der Rodlers/Rodlerin ein ausreichend großes Widerstandsmoment erfährt, um automatisch angehoben bzw. stark unterstützt angehoben zu werden, so daß nur für das Lenken oder Abbremsen der jeweilige Fuß aktiviert, nämlich mit der Ferse niederbewegt, werden muß.

Das "Übergreifen" der Schwingen 11, 12 über den Schlittenkufen-Querschnitt (egal ob mit kopfstehendem U-Profil oder kopfstehendem L-Profil) gewährleistet eine stabile Schwingen-Anordnung und letztlich auch eine stets einwandfreie Funktion der erfindungsgemäßen Lenk- und Bremsvorrichtung 2 an einem Kufenschlitten mit selbst unlenkbaren Schlittenkufen 3, 4.

Bei Guß- und/oder Spritz-Ausführungen (z.B. aus Kunststoff) ist es bevorzugt und vorteilhaft, die flügelartigen Lenk- und Bremsorgane zumindest partiell materialsparend mit Querschnittsreduzierungen zu gestalten.

### Bezugszeichenliste

- 1: Rodelschlitten
- 2: Lenk- und Bremsvorrichtung an/für 1
- 3: Schlittenkufen (links)
- 4: Schlittenkufen (rechts)
- 5: Sitzbank von 1
- 6: seitlicher Längsholm (links) von 5
- 7: seitlicher Längsholm (rechts) von 5
- 8: vorderendige Querstrebe von 1 für Zugseil od.dgl.
- 9: Anschlag für Höhenbegrenzung des Schwenkwegs von 2
- 10: Anschlag für Höhenbegrenzung des Schwenkwegs von 2
- 11: Schwinge (links) gemäß Fig. 1-6
- 11': Schwinge (links) gemäß Fig. 7 - nicht dargestellt
- 12: Schwinge (rechts) gemäß Fig. 1-6
- 12': Schwinge (rechts) gemäß Fig. 7
- 13: flügelartiges Lenk- und Bremsorgan (links) gemäß Fig. 1-6
- 13': flügelartiges Lenk- und Bremsorgan (links) gemäß Fig. 7 - nicht dargestellt
- 14: flügelartiges Lenk- und Bremsorgan (rechts) gemäß Fig. 1-6
- 14': flügelartiges Lenk- und Bremsorgan (rechts) gemäß Fig. 7
- 15: Lager- und/oder Schwenkorgan für Schwinge links
- 16: Lager- und/oder Schwenkorgan für Schwinge rechts
- 17: Federelement für Schwinge links
- 18: Federelement für Schwinge rechts
- S: Rodelschlitten-Symmetrieebene

## Patentansprüche

1. Lenk- und Bremsvorrichtung für einen Rodelschlitten mit zwei unlenkbaren Schlittenkufen, wobei diese Vorrichtung zwei voneinander unabhängig und anschlagbegrenzt höhenverschwenkbar an den Schlittenkufen befestigte bzw. befestigbare sowie mittels Federkraft um ihre am vorderen Ende vorgesehene Lagerachse in Außerfunktionsstellung hochschwenkbare, spiegelbildliche Schwingen aufweist, welche jeweils das eigentliche Lenk- und Bremsorgan tragen,
**dadurch gekennzeichnet, daß** die beiden Schwingen (11/11', 12/12') die Schlittenkufen (3,4) in der vorderen Rodelschlitten-Hälfte, insbesondere etwa im Bereich der Kufenbögen, überlappend und/oder übergreifend ausgebildet sind und jeweils ein in der Draufsicht des Rodelschlittens (1) bzw. der montierten Lenk- und Bremsvorrichtung (2) in Gebrauchsstellung an der Kufeninnenseite vorspringendes, zumindest mit seinem rückwärtigen Ende in Richtung Rodelschlitten-Symmetrieebene (S) schräggestelltes Lenk- und Bremsorgan (13/13', 14/14') mit hochkantigem, seitliche Widerstandsflächen bildenden Querschnitt tragen.

2. Lenk- und Bremsvorrichtung nach Anspruch 1, **dadurch gekennzeichnet, daß** die schräggestellten Funktionsflächen der beiden Lenk- und Bremsorgane (13/13', 14/14') einen spitzen Winkel von etwa 10-30° einschließen.

3. Lenk- und Bremsvorrichtung nach Anspruch 1 oder 2, **dadurch gekennzeichnet, daß** die beiden Lenk- und Bremsorgane (13/13', 14/14') von nach hinten auf einem Bogen oder auf einer Schräge abfallenden flachen Flügeln gebildet sind, deren Querschnittslängsachse hochkant und annähernd vertikal steht.

4. Lenk- und Bremsvorrichtung nach Anspruch 3, **dadurch gekennzeichnet, daß** die Lenk- und Bremsorgane (13/13', 14/14') seitwärts federnd ausgebildet und/oder angeordnet sind.

5. Lenk- und Bremsvorrichtung nach einem der Ansprüche 1 bis 4, **dadurch gekennzeichnet, daß** die bodenseitige Peripherie der beiden Lenk- und Bremsorgane (13/13', 14/14') bogenförmig gestaltet sind.

6. Lenk- und Bremsvorrichtung nach einem der Ansprüche 1 bis 5, **dadurch gekennzeichnet, daß** die Flügelenden der Lenk- und Bremsorgane (13/13', 14/14') abgerundet sind.

7. Lenk- und Bremsvorrichtung nach einem der Ansprüche 1 bis 6, **dadurch gekennzeichnet, daß** die Lenk- und Bremsorgane (13/13', 14/14') auswechselbar gehaltert sind.

8. Lenk- und Bremsvorrichtung nach einem der Ansprüche 1 bis 7, **dadurch gekennzeichnet, daß** die flügelartigen Lenk- und Bremsorgane (13/13', 14/14') aus auch bei Kälte bruchsicherm Kunststoff bestehen.

9. Lenk- und Bremsvorrichtung nach einem der Ansprüche 1 bis 13, **dadurch gekennzeichnet, daß** die Schwingen (11/11', 12/12') mit einem Betätigungsseilzug verbunden sind.

10. Rodelschliten mit zwei unlenkbaren Gleitkufen, **gekennzeichnet durch** eine Lenk- und Bremsvorrichtung (2) nach mindestens einem der vorhergehenden Ansprüche 1 bis 9.
